# EUROPEAN PATENT APPLICATION

(11) **EP 1 622 351 A1**
(43) Date of publication of application: **01.02.2006**
(21) Application number: 04018136.4
(22) Date of filing: 30.07.2004
(51) Int. Cl.: H04M 15/00, G07F 19/00, H04L 12/24

(54) **Method for the payment of network-based services with selection of a payment instrument**

(71) Applicant: SIEMENS AKTIENGESELLSCHAFT, 80333 München (DE)
(72) Inventor: Santa Cruz, Carmen, 9000 Aalborg (DK)

(57) **Abstract**

There is a need to improve existing payment mechanisms for different services offered in cellualar communication networks.

The most common solution for carrying out payment for cellular communication services offered in a cellular communication network are mainly based on a system providing the service sending a charging data record to a billing centre.

An objective of the invention is to bring out a portable electronic device with which user control over paying for a service can be improved.

Another objective of the invention is enable a system for providing a service to improve user control over paying for a service.

If the portable electronic device (105) comprises data (250) on payment instruments, and means (203) for receiving a request (K1) for a payment of a service that is being or going to be executed at or subscribed by the portable electronic device (105), the request (K1) comprising a preferred payment instrument (PPI), and if the portable electronic device further comprises menas (201) for requesting a user confirmation (L1) for the payment, means (207,205), responsive to receiving the user confirmation (L3), for sending a payment message (K3) to a system (103) providing the service, the payment message (K3) comprising an accepted payment instrument (API), and means for receiving a receipt message (K5) from the system (103) for providing the service user's control over payments can be improved. Furthermore, in this manner it is relatively simple for the system providing the service to send payment requests to the portable electronic device.

## Description

### Background art

There is a need to improve existing payment mechanisms for different services offered in cellular communication networks. Especially urgent this need is as regards services that are currently under standardization at the Open Mobile Alliance OMA.

From usability point of view, a desired payment mechanism does not make it more difficult for the user to access a service offered in a cellular communication network requiring payment but is still secure and transparent to the user. Furthermore, strict user control over transactions is desirable.

The most common solution for carrying out payment for cellular communication services offered in a cellular communication network are mainly based on a system providing the service sending a charging data record to a billing centre. Many services based on Short Message Service SMS, for example, especially of type "order a logo or a ringing tone", are based on this approach. Furthermore, paying for normal GSM services, such as for originating a call, takes normally place after the operator has collected all charging data records that the subscriber has caused, the operator then having sent an invoice to the subscriber.

### Summary of the invention

An objective of the invention is to bring out a portable electronic device with which user control over paying for a service can be improved. This objective can be achieved with a portable electronic device as set out in claim 1.

Another objective of the invention is enable a system for providing a service to improve user control over paying for a service. This objective can be achieved as set out in claim 7.

Dependent claims describe various advantageous embodiments of the invention.

### Advantages of the invention

If the portable electronic device comprises data on payment instruments, and means for receiving a request for a payment of a service that is being or going to be executed at or subscribed by the portable electronic device, the request comprising a preferred payment instrument, and if the portable electronic device further comprises means for requesting a user confirmation for the payment, means, responsive to receiving the user confirmation, for sending a payment message to a system providing the service, the payment message comprising an accepted payment instrument, and means for receiving a receipt message from the system for providing the service user's control over payments can be improved. Furthermore, in this manner it is relatively simple for the system providing the service to send payment requests to the portable electronic device.

If the portable electronic device further comprises means for comparing the preferred payment instrument with a predefined preferred payment instrument for the service stored among the data on payment instruments and means adapted to set a value for the accepted payment type for the service, the payment can be carried out by using payment instrument preferred by the user for the service.

If the request for payment further comprises allowable values for the accepted payment type and the payment application further comprises means for comparing said predefined preferred payment type with the allowable payment type, and means for requesting the user to cancel executing/subscribing the service or to confirm using the preferred payment type, the provider of the service can also specify his or her preferences, but the user can still have the decision whether or not to accept the request for payment.

If a portable electronic device further comprises means for changing said predefined preferred payment instrument for the service, the user can change and update the preferred payment instrument for the service. This helps the user to adapt also payment for a service to possible changes in personal finances or preferences.

If a portable electronic device further comprises means for requesting a user to enter a predefined code prior to allowing him/her to change said predefined preferred payment instrument in data on payment instruments, unauthorized changing of predefined preferred payment instrument data can be avoided.

If data on payment instruments comprises a maximum cost for using the service, and/or any of the following: service type, service provider, payment instrument, payment instrument provider, user's control on payments depending on an individual service, on type of service, payment instrument, or on payment instrument provider can be improved.

If a system for providing a service comprises means for transmitting a request for a payment of a service to a portable electronic device, the request comprising a preferred payment instrument, means for receiving a payment message from the portable electronic device, the payment message comprising an accepted payment instrument, and means for transmitting a receipt message to the portable electronic device, the provider of the service can enable a better user control over the payment but still propose a payment instrument most suitable for him- or herself.

If the request for a payment further comprises values indicating allowable values for the accepted payment instrument, and/or any of the following: service type, service provider, payment instrument, payment instrument provider, the service provider can restrict the user's freedom of choice of the payment instrument. The latter values help defining the kind of service, service provider, payment instrument, and payment instrument provider.

If the request for payment and the payment message are transmitted as XML files, it is relatively easy to communicate the messages and construct applications at the system for providing a service and at the portable electronic device.

### List of Figures

In the following, the invention is discussed in more detail with reference to the examples shown in the accompanying drawings in Figures 1 to 3, of which:
Figure 1 shows a simplified architecture of a cellular communication network;
Figure 2 is an extremely simplified block diagram of a portable electronic device; and
Figure 3 shows how payment for a service offered by a system for providing a service in a cellular communications network can be carried out by a portable electronic device that is executing or going to execute or subscribe the service.

Same reference numerals refer to similar structural elements throughout the Figures.

### Detailed description

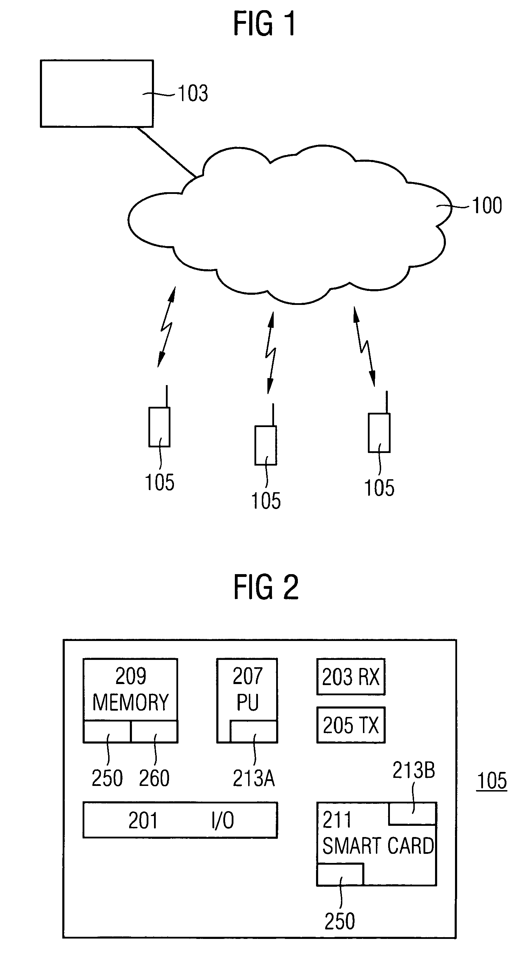

Figure 1 shows a simplified architecture of a cellular communication network 100. A service offered in cellular communication network 100 is provided by a system 103 for providing a service. Typically, the system 103 comprises one or more computing stations that are operated by the provider of the service. A portable electronic device 105, especially a cellular telephone, can be connected to the cellular communication network 100, and it is suitable for using some services offered in the cellular communication network 100.

Figure 2 is an extremely simplified block diagram of a portable electronic device 105. The portable electronic device 105 comprises means 201 for displaying data to a user and for receiving user input. The portable electronic device 105 comprises a processing unit 207 and memory 209. It communicates with the cellular communication network 100 with transmitter 205 and receiver 203 which are both controlled by the processing unit 207. The portable electronic device 105 further comprises a smart card 211.

Data 250 on payment instruments is stored on smart card 211. The smart card 211 comprises a payment application 213B that is adapted to work together with a payment application 213A executable on the processing unit 207. The payment application 213A is adapted for bi-directional communication with payment application 213B.

Data 250 on payment instruments is a means to associate a particular type of payment instrument PIT, or payment instrument provider PIP, to a particular service type OSUI or service provider OPUI.

Furthermore, the portable electronic device 105 comprises a file 260 stored in the portable electronic device 105, preferably in its memory 209. The name of the file 260 may be "OMAPaymentProfiles", and it can be an XML file.

Some fields of file 260 are shared with data 250 of payment instruments. For this purpose, file 260 may comprise following elements: service type unique identifier OSUI, service provider unique identifier OPUI, and payment instrument also associated with a unique identifier PIUI. The PIUI comprises two separate fields: one identifying the payment instrument type PIT and the other identifying the payment instrument provider PIP.

User of the portable electronic device 105 may control the data 250 on payment instruments. For this purpose, application 213A provides a user friendly interface for accessing and modifying file 260 and thus also data 250 on payment instruments.

The payment application 213A checks whether file 260 is changed and if necessary, updates data 250 on payment instruments in smart card 211 correspondingly. This approach allows more effective querying from and storing of data to the smart card 211. In this manner, the file 260 can still be maintained even though accessing the smart card 211 is minimized.

Unauthorized modifying of file 260 can be prevented by requiring the user to enter a predefined code, such as a PIN, in order to prevent unauthorized modifying of payment profiles. Furthermore, data 250 on payment instruments is located in the secure element, and the payment application 213A, 213B controls the access to it.

The user can define limits for a possible payment according to the type of service and/or service provider. A limit can be a price limit for a single service (e.g. 10 € per service), and a global limit (e.g. maximum 100 € to be spent in particular service) can be defined as well. The latter may be useful for the user to control expenses that would result from using different services. The limits are preferably stored in file 260 or among data 250 of payment instruments.

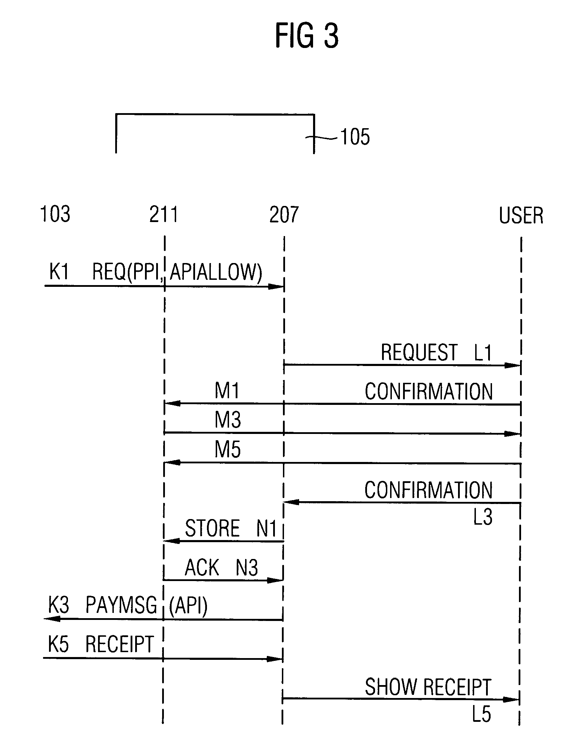

Figure 3 shows how payment for a service offered by a system 103 for providing a service in a cellular communications network 100 can be carried out by a portable electronic device 105 that is executing or going to execute or subscribe the service.

The portable electronic device 105 receives a request K1 for payment for a service from the system 103 for providing the service. Request K1, preferably an XML message, may comprise an identifier defining preferred payment instrument PPI. Furthermore, it comprises a randomly generated session identifier generated by system 103. Request K1 may furthermore comprise allowed values APIALLOW of accepted payment instruments API.

Request K1 is pushed by the system 103. Prior to this, the system 103 may send a request to the portable electronic device 105 for transmitting i) a list of all available payment instruments, or ii) the unique identifier PIUI identifying preferred payment instrument for the service. Then the system 103 selects one of them to send (in the former case) or the identified by the unique identifier PIUI (in the latter case), as preferred payment instrument PPI in the payment request K1.

In response to receiving the request K1, payment application 213A communicates information comprised in the payment request by displaying message L1 through means 201 for displaying data to the user.

In response to seeing message L1, the user may choose a payment instrument that he or she is willing to accept, within possible limits posed by APIALLOW. This payment instrument will then be the accepted payment instrument API. For this purpose, the payment application 213 may send request M1 to see data 250 of payment instruments stored on the smart card 211 or in memory 209. Data 250 of payment instruments stored on the smart card 211 or in memory 209 is communicated to the user in message M3. The user may wish to change a payment profile, in which case the payment applications 213A executed on processing unit 207 modifies file 260. After this, the payment application 213B modifies the related data 250 on payment instruments stored on the smart card 211, and in memory 209. This has been denoted by message M5.

Alternatively, prior to transmitting K1, the system 103 for providing the service can request the PIUI of the user's preferred payment instrument and associate this with service type and/or provider. This becomes PIT.

If the PIT is equal to PIUI, the step of user verification and selection can be skipped and PIUI is automatically selected as the payment instrument for completing the payment transaction.

In case a limit would be exceeded by the payment, the user can be given a chance to update the limit for that particular session (or permanently) through an adequate interface of the payment application 213A, and to proceed with the payment.

If there is a global limit, the payment application 213B updates the status field in data 250 on payment instruments for the service in question, after which payment request K1 is approved.

The request K1 or M1 can be automatically rejected if a particular profile has been set for a particular type of service or service provider and/or for a particular service or service provider. This can be further controlled by additional switches set by the user in the payment application such as "Accept Always", "Always request a confirmation", and "Reject Always". If the preferred payment instrument PPI is a non-accepted payment instrument as defined in file 260 for that type of service, the request K1 is rejected. The switch for rejection of request K1 can be done dependent on the service type and/or service provider through adequate profiling/filtering. This information can be included as an additional field in file 260.

The user may decide whether to accept or refuse the request K1.

If the request K1 is to be accepted, the user gives via means 201 for giving user input a confirmation that is passed in message L3 to the processing unit 207. Then a payment message K3 is sent, after which a receipt K5 is received at the portable electronic device 105.

If the user has not given any value for the accepted payment instrument API, the value of accepted payment instrument API obtains the value of preferred payment instrument PPI. If the file 260 is not present, the payment application 213A presents the user a selection of available payment instruments. The list of available payment instruments may be a default part of file 260.

After confirmation and possible updating of data 250 on payment profiles in the smart card 211 for which storing message N1 and acknowledgement N3 may be transmitted, the payment application 213A commands the portable electronic device 105 to transmit payment message K3 to the system 103 for providing the service. The payment message K3 may be an authenticated message, it comprises accepted payment instrument API, OSUI, OPUI, and session identifier.

In response to receiving payment message K3, the system 103 may respond with receipt K5 that may be displayed to the user by communicating message L5.

To deter man-in-the-middle attacks a request for confirmation L1 displayed to the user may include the name of the service provider, the OSUI as well as the session number. The request for confirmation L1 can request the entering of the predefined code, such as of a PIN. This step for entering of PIN code might be the same step as to permit access to the file 260. For reasons of usability, the predefined code can be same for more than one service.

The service offered in cellular communication network 100 can be developed using Java MIDP. The payment application 213A, 213B, for security reasons, may be proprietary to the device 105, 211 in which it is located. A common JCP API can be developed for providing access to the payment application 213A, 213B from the system 103 for providing the service application.

In the examples described above, data 250 on payment instruments is located in the smart card 211. In order to improve usability, it may be duplicated wholly or in part to the memory 209. Data 250 on payment instruments should be integral with file 260 which comprises fields service type, OMA provider, and Payment Instrument.

Instead of storing data 250 on payment instruments into the smart card 211, it can be stored wholly in the memory 209 of the portable electronic device, but then preferably encrypted or at least signed, in order to prevent unauthorised modification. If data 250 on payment instrument is stored in the smart card 211, it can be stored as plain text.

The function of file 260 and data 250 on payment instruments may also be used to enable user control on payments resulting from use of services that the service provider charges from the user after the user has used the service.

Examples of services offered in cellular communication network comprise Digital Rights Management DRM, games, messaging, presence, availability, location, mobile web services, and Push to talk over Cellular PoC.

## Claims

1. A portable electronic device (105) for paying a service offered through a cellular communication network (100), **comprising:**
- data (250) on payment instruments;
- means (203) for receiving a request (K1) for a payment of a service that is being or going to be executed at or subscribed by the portable electronic device (105), from a system (103) for providing the service, the request (K1) comprising a preferred payment instrument (PPI);
- means (201) for requesting a user confirmation (L1) for the payment;
- means (207, 205), responsive to receiving the user confirmation (L3), for sending a payment message (K3) to the system (103) for providing the service, the payment message (K3) comprising an accepted payment instrument (API); and
- means (203) for receiving a receipt message (K5) from the system (103) for providing the service.

2. A portable electronic device (105) according to claim 1, further **comprising:**
- means (207) for comparing the preferred payment instrument (PPI) with a predefined preferred payment instrument for the service stored among the data (250) on payment instruments;
- means (207), adapted to set a value for the accepted payment type (API) for the service.

3. A portable electronic device (105) according to claim 1 or 2, **wherein:**
- the request (K1) further comprises allowable values (APIALLOW) for the accepted payment type (API); and
- the payment application (213A, 213B) further comprises:
a. means (213A, 213B) for comparing said predefined preferred payment type (PPI) with the allowable payment type (API);
b. means (213A, 213B) for requesting the user to cancel executing/subscribing the service or to confirm using the preferred payment type (PPI).

4. A portable electronic device (105) according to claim 2 or 3, further **comprising**: means (207, 211, 213A, 213B) for changing said predefined preferred payment instrument for the service.

5. A portable electronic device (105) according to claim 4, further **comprising:** means (103A, 103B, 201, 207, 211) for requesting a user to enter a predefined code prior to allowing him/her to change said predefined preferred payment instrument in data (250) on payment instruments.

6. A portable electronic device (105) according to any one of the preceding claims 2 to 5, **wherein:** said data (250) on payment instruments comprises a maximum cost for using the service, and/or any of the following: service type (OSUI), service provider (OPUI), payment instrument (PIT), payment instrument provider (PIP).

7. A system (103) for providing a service, **comprising**:
- means (103) for transmitting a request (K1) for a payment of a service to a portable electronic device (115), the request (K1) comprising a preferred payment instrument (PPI);
- means (103) for receiving a payment message (K3) from the portable electronic device (105), the payment message (K3) comprising an accepted payment instrument (API) ; and
- means (103) for transmitting a receipt message (K5) to the portable electronic device (105).

8. A system (103) according to claim 7, **wherein**: the request (K1) further comprises values (APIALLOW) indicating allowable values for the accepted payment instrument (API), and/or any of the following: service type (OSUI), service provider (OPUI), payment instrument (PIT), payment instrument provider (PIP)

9. A portable electronic device (105) or a system (103) according to any one of the preceding claims, **wherein**: the request (K1) and the payment message (K3) are transmitted as XML files.
